# EUROPEAN PATENT APPLICATION

(11) **EP 4 467 948 A1**
(43) Date of publication of application: **27.11.2024**
(21) Application number: 23822749.0
(22) Date of filing: 06.04.2023
(51) Int. Cl.: G01L 1/22, A47B 9/20, G01B 7/16

(54) **VERTICAL LIFTING COLUMN HAVING ENCOUNTERED OBSTRUCTION DETECTION FUNCTION, AND ELECTRIC LIFTING MECHANISM**

(30) Priority: 15.06.2022 CN 202221508690 U
(71) Applicant: Zhejiang Jiecang Linear Motion Technology Co., Ltd, Shaoxing, Zhejiang 312500 (CN)
(72) Inventor: ZHOU, Shaoping, Shaoxing, Zhejiang 312500 (CN); CHEN, Xueli, Shaoxing, Zhejiang 312500 (CN); CHEN, Chaofeng, Shaoxing, Zhejiang 312500 (CN)
(74) Representative: karo IP
(86) International application number: PCT/CN2023/086401
(87) International publication number: WO 2023/241178

(57) **Abstract**

Disclosed is an obstruction detection-enabled lifting column and an electric lifting mechanism, which relate to linear actuators. A sensor is easily mounted and dismantled and capable of detecting an obstruction instantly at the moment the obstruction is hit, thereby improving an obstruction response speed of the lifting column. The obstruction detection-enabled lifting column as disclosed includes a screw rod and an obstruction detection plate configured on the screw rod, an assembly hole being formed in the obstruction detection plate, the screw rod passing through the assembly hole; a sensor configured to detect a deformation stress on the obstruction detection plate is arranged on the obstruction detection plate, a fixing part configured to securely mount the obstruction detection plate is provided on either side of the sensor, respectively, a central angle formed by a connecting line between one end of the sensor and a center of the assembly hole and a connecting line between an opposite end of the sensor and the center of the assembly hole is less than 360°, and a perpendicular bisector of a connecting line between centers of two fixing parts passes through the sensor.

## Description

### FIELD

The subject matter described herein relates to linear actuators, and more particularly relates to an obstruction detection-enabled lifting column, and an electric lifting mechanism.

### BACKGROUND

An electric lifting mechanism such as a lift desk or a lift bed has a feature of height adjustability. The electric lifting mechanism generally comprises a platform and a lifting column that drives the platform to be raised and lowered. In a case of the platform hitting an obstruction when being raised or lowered, if the lifting column continuously drives lifting or lowering of the platform, an interacting force would be generated due to contact between the platform and the obstruction, which interacting force would be transmitted to the lifting column via the platform. In this case, if the lifting column does not stop instantly, the platform or the lifting column would be damaged by the obstruction, and if the obstruction is a body part, the body part would be injured.

To address this problem, an existing electric lifting mechanism is equipped with an obstruction detecting mechanism that can detect presence of an obstruction. A currently highly-sensitive obstruction detecting mechanism adopts an element referred to as an obstruction detector, which is capable of converting a pressure signal to an electric signal, and vice versa. However, if the degree of deformation at a mounting position of the obstruction detector is not large enough, the resulting deformation stress would not suffice to activate the obstruction detector to generate an obstruction alarm, in which case till a deformation stress large enough to activate the obstruction detector is achieved, a certain amount of time has elapsed since the platform bumps into the obstruction. Therefore, the existing electric lifting mechanism is delayed in response to an obstruction.

### SUMMARY

To overcome the above and other drawbacks in conventional technologies, the present disclosure provides an obstruction detection-enabled lifting column; a sensor is easily mounted and dismantled and can detect an obstruction instantly at the moment the obstruction is hit, thereby improving an obstruction response speed of the lifting column.

A technical solution of the present disclosure is set forth *infra.*

An obstruction detection-enabled lifting column, comprising a screw rod and an obstruction detection plate configured on the screw rod, an assembly hole being formed in the obstruction detection plate, the screw rod passing through the assembly hole, wherein a sensor configured to detect a deformation stress on the obstruction detection plate is arranged on the obstruction detection plate, a fixing part configured to securely mount the obstruction detection plate is provided on either side of the sensor, respectively, a central angle formed by a connecting line between one end of the sensor and a center of the assembly hole and a connecting line between an opposite end of the sensor and the center of the assembly hole is less than 360°, and a perpendicular bisector of a connecting line between centers of two fixing parts passes through the sensor.

Based on the solution *supra,* a distance between the sensor and the assembly hole is less than a distance between the sensor and an edge of the obstruction detection plate.

Based on the solution *supra,* respective fixing parts are disposed proximal to the edge of the obstruction detection plate.

Based on the solution *supra,* the assembly hole is arranged at a central position of the obstruction detection plate.

Based on the solution *supra,* a distance between the sensor and the assembly hole is less than a distance between the sensor and respective fixing parts.

Based on the solution *supra,* respective fixing parts are equally distant from the assembly hole.

Based on the solution *supra,* two sensors are provided, the perpendicular bisector of the connecting line between the centers of the two fixing parts extending through at least one of the sensors.

Based on the solution *supra,* the two sensors are spaced by the assembly hole.

Based on the solution *supra,* two fixing parts are arranged on the obstruction detection plate, the two fixing parts being symmetrical about the center of the assembly hole.

Based on the solution *supra,* at least three fixing parts are arranged on the obstruction detection plate; in a circumferential direction of the assembly hole, a length of a connecting line between centers of two neighboring fixing parts is L; the sensor is at least partially located between two fixing parts with largest L; or, at least three fixing parts uniformly distributed along an outer periphery of the assembly hole are arranged on the obstruction detection plate, and in the circumferential direction of the assembly hole, the sensor is located between any two neighboring fixing parts.

Based on the solution *supra,* the lifting column further comprises a motor kit configured to drive the screw rod, the obstruction detection plate is a bearing plate disposed on the motor kit, and the fixing parts fix the obstruction detection plate onto the motor kit.

Based on the solution *supra,* the fixing part is a snap fastener in snap engagement with the motor kit; or, the fixing part comprises a fixing hole formed in the obstruction detection plate and a fastener passing through the fixing hole to be thereby securely attached to the motor kit.

Based on the solution *supra,* the sensor is a strain gauge or a piezoelectric element adhesively bonded on the obstruction detection plate.

An electric lifting mechanism comprises a lifting platform and an obstruction detection-enabled lifting column according to any of the solutions stated *supra,* the lifting column being configured to control lifting and lowering of the lifting platform.

The present disclosure offers the following benefits:
The present disclosure discloses an obstruction detection-enabled lifting column, which has a highly sensitive obstruction detection feature and thus offers a high safety and a high reliability. The lifting column assembled to a device serves to drive the device or a part of the device to be lifted or lowered (for example, in a case of being assembled to a lift desk, controlling lifting or lowering of the body or desktop of the lift desk); if an obstruction is hit in the way of lifting or lowering, the screw rod transfers the axial action force received to the obstruction detection plate, causing the obstruction detection plate to be stressed and deformed, thereby activating the sensor to detect that the lifting column hits an obstruction.

The fixing parts are configured to securely mount the obstruction detection plate. The areas on the obstruction detection plate around the fixing parts have the highest rigidity due to the secured connection; the farther from the fixing parts, the lower the rigidity; the area where the perpendicular bisector of the connecting line between the centers of two fixing parts is located has the lowest overall rigidity among the section between the two fixing parts, so that the sensor mounted there can detect an obstruction more quickly, thereby enhancing obstruction detection sensitivity of the lifting column.

The sensor, when being mounted on the obstruction detection plate, does not need to pass through the screw rod. Instead, the sensor may be first mounted on the obstruction detection plate and then the screw rod is assembled; or, the obstruction detection plate is first assembled on the screw rod and then the sensor is mounted. In addition, when the sensor fails, it may be directly dismantled or replaced from the obstruction detection plate without a need of disassembling the obstruction detection plate from the screw rod, whereby operation is eased.

Furthermore, a distance between the sensor and the assembly hole is less than a distance between the sensor and an edge of the obstruction detection plate. It is noted that, the sensor generally comprises an electronic element having a detection feature and a housing or bracket supporting the electronic element; the distance between the sensor and the fixing part actually refers to the distance between the center of the electronic element in the sensor and the center of the fixing part. Upon hitting an obstruction, the screw rod transmits an action force to the obstruction detection plate; the action force is transmitted around with diminishment from the assembly hole. If the edge of the obstruction detection plate is distant from the assembly hole, it is hard to generate a desired deformation stress instantly when the lifting column hits the obstruction. By disposing the sensor closer to the assembly hole, the sensor can detect the deformation stress instantly to generate an obstruction signal at the early stage of hitting the obstruction.

Furthermore, respective fixing parts are disposed proximal to the edge of the obstruction detection plate. The positions where the fixing parts are disposed on the obstruction detection plate have an enhanced rigidity so that deformation stress can hardly occur at the moment an obstruction is hit. The more distantly the fixing parts are disposed from the assembly hole, the less the deformation of the obstruction detection plate disposed around the assembly hole is affected, whereby the obstruction response speed of the lifting column is ensured.

Furthermore, the assembly hole is arranged at a central position of the obstruction detection plate. The center of the obstruction detection plate is the least rigid area on the entire obstruction detection plate, where the assembly hole is distantly spaced from the fixing parts; therefore, by disposing the assembly hole at the central position of the obstruction detection plate, the obstruction detection plate around the assembly hole 310 achieves the largest deformation upon hitting an obstruction, which reduces the time taken by the sensor to detect the obstruction.

Furthermore, a distance between the sensor and the assembly hole is less than a distance between the sensor and respective fixing parts. The fixing parts can enhance rigidity of the obstruction detection plate. To enable the sensor to detect an obstruction instantly, it is needed to dispose the sensor at a position where the deformation stress is concentrated. By disposing the fixing parts distant from the sensor, the sensor may be less affected by the fixing parts, leading to a higher obstruction detection speed.

Furthermore, respective fixing parts are equally distant from the assembly hole. The assembly hole is formed on the perpendicular bisector of the connecting line between the centers of the fixing parts, i.e., the assembly hole is located in the area of the lowest rigidity on the obstruction detection plate, so that at the early stage when the lifting column hits an obstruction, the obstruction detection plate disposed around the assembly hole can achieve a desired degree of deformation instantly to activate the sensor to generate an obstruction signal.

Furthermore, two sensors are provided, the perpendicular bisector of the connecting line between the centers of the two fixing parts extending through at least one of the sensors. The two sensors can detect stresses received in different areas on the obstruction detection plate; by analyzing the signal data of the two sensors, obstruction detection accuracy can be enhanced with reduced false alarms. When one of the two sensors fails, the other sensor can also perform obstruction detection alone. By disposing at least one of the two sensors in the area of the obstruction detection plate where the deformation stress is concentrated, the obstruction response speed of the lifting column is ensured.

Furthermore, the two sensors are spaced by the assembly hole. The position of an obstruction hit by the device installed with the lifting column is not fixed. For a different position of the obstruction, the direction of the action force transmitted by the screw rod towards the obstruction detection plate also varies. When the action force of the screw rod is transmitted towards one side of the assembly hole, a difference arises between the degrees of deformation of the two lateral sides of the assembly hole, where obstruction detection of the sensor at the opposite side will be delayed. By disposing the sensor at each of the two lateral sides of the assembly hole, the detection range of the sensors increases, so that irrespective of which direction the action force of the screw rod is directed to, the sensors can always detect the obstruction instantly.

Furthermore, two fixing parts are arranged on the obstruction detection plate, the two fixing parts being symmetrical about the center of the assembly hole. By arranging the two fixing parts to be equally distant from the assembly hole and meanwhile disposing the assembly hole at a midpoint position of the connecting line between the centers of the two fixing parts, the area of the obstruction detection plate around the assembly hole is a stress concentrated area, whereby the obstruction detection speed of the sensor is ensured.

Furthermore, at least three fixing parts are arranged on the obstruction detection plate; in a circumferential direction of the assembly hole, a length of a connecting line between centers of two neighboring fixing parts is L; the sensor is at least partially located between two fixing parts with largest L; or, at least three fixing parts uniformly distributed along an outer periphery of the assembly hole are arranged on the obstruction detection plate, and in the circumferential direction of the assembly hole, the sensor is located between any two neighboring fixing parts. Provision of more than two fixing parts leads to a more secure attachment of the obstruction detection plate. In a case of a plurality of fixing parts being distributed non-uniformly in the circumferential direction of the assembly hole, the sensor is disposed between the two neighboring fixing parts with the largest spacing, where the sensor is affected least compared with being disposed between other fixing parts, whereby the obstruction response speed of the lifting column is ensured. If the fixing parts are uniformly distributed in the circumferential direction of the assembly hole, the entire obstruction defection plate is uniformly stressed when hitting an obstruction, in which case the sensor can be disposed between any two neighboring fixing parts.

Furthermore, the lifting column further comprises a motor kit configured to drive the screw rod, the obstruction detection plate is a bearing plate disposed on the motor kit, and the fixing parts fix the obstruction detection plate onto the motor kit. The bearing plate is configured to mount a bearing so as to improve rotating smoothness of the screw rod; upon hitting an obstruction, the action force on the screw rod is transmitted to the bearing plate, so that obstruction detection is enabled just by arranging the sensor on the bearing plate, which also eliminates a need of additionally arranging a plate body for obstruction detection on the screw rod.

Furthermore, the sensor is a strain gauge or a piezoelectric element adhesively bonded on the obstruction detection plate. The strain gauge or the piezoelectric element can convert a pressure signal to an electric signal, so that when the obstruction detection plate is deformed, the sensor would be driven to deform, thereby generating a pressure signal and an electric signal. The manner of bonding the sensor onto the obstruction detection plate facilitates assembly and disassembly, eliminating a need of using a tool or other fittings.

Further disclosed is an electric lifting mechanism. The electric lifting mechanism adopts the obstruction detection-enabled lifting column as described *supra;* when a lifting platform hits an object or a user's body part in the process of being lifted or lowered, the obstruction detection plate is deformed, and the sensor can quickly detect the deformation stress on the obstruction detection plate, so that the electric lifting mechanism performs a corresponding obstruction response, whereby the electric lifting mechanism has a higher safety and a higher reliability. When the sensor fails, it can be replaced without a need of disassembling the obstruction detection plate from the screw rod.

These and other features and advantages of the disclosure will be described in detail in the example implementations and accompanying drawings below.

### BRIEF DESCRIPTION OF THE DRAWINGS

Hereinafter, the disclosure will be further described with reference to the accompanying drawings, in which:
Fig. 1 is a structural schematic diagram of a lifting column according to an implementation of the disclosure;
Fig. 2 is an internal structural schematic diagram of the lifting column in an implementation of the disclosure;
Fig. 3 is an enlarged view of part A in Fig. 2;
Fig. 4 is a schematic view of mounting an obstruction detection plate to a lower surface of a motor kit in an implementation of the disclosure;
Fig. 5 is a structural schematic diagram of a motor kit in an implementation of the disclosure;
Fig. 6 is a structural schematic diagram of an obstruction detection plate formed with two fixing holes in an implementation of the disclosure;
Fig. 7 is a structural schematic diagram of an obstruction detection plate arranged with two sensors in an implementation of the disclosure;
Fig. 8 is a structural schematic diagram of the obstruction detection plate with four fixing holes non-uniformly distributed thereon in an implementation of the disclosure;
Fig. 9 is a structural schematic diagram of the obstruction detection plate with four fixing holes uniformly distributed thereon in an implementation of the disclosure.

### Reference Numerals:

screw rod 100;
motor kit 200, kit body 210, motor 220, projection 230, deformation gap 240;
obstruction detection plate 300, assembly hole 310, fixing hole 320, fastener 330;
sensor 400, metal plate 410, piezoelectrical material 420, wire 430.

### DETAILED DESCRIPTION OF EMBODIMENTS

Hereinafter, the technical solutions of the disclosure will be explained and illustrated through implementations with reference to the accompanying drawings. However, the implementations are only some implementations of the disclosure, not all of them. Other implementations obtained by those skilled in the art based on the implementations described herein without exercise of inventive work all fall within the protection scope of the disclosure.

The terms "exemplary" and "some implementations" referred to *infra* having a meaning of "used as an example, an implementation, or an illustration"; any implementation referred to as "an example" shall be construed as preferred over or better than other implementations. To ease description of the disclosure, various specific details are given in the implementations described *infra,* those skilled in the art should understand that the disclosure can also be implemented without some of those specific details.

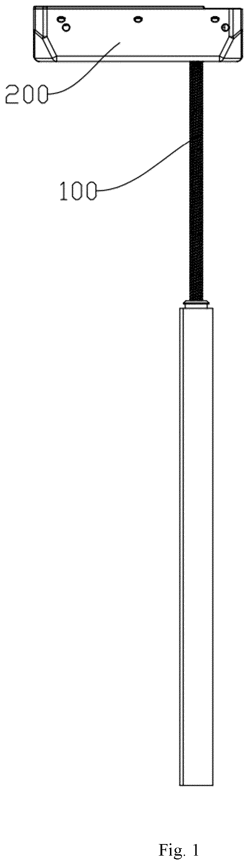

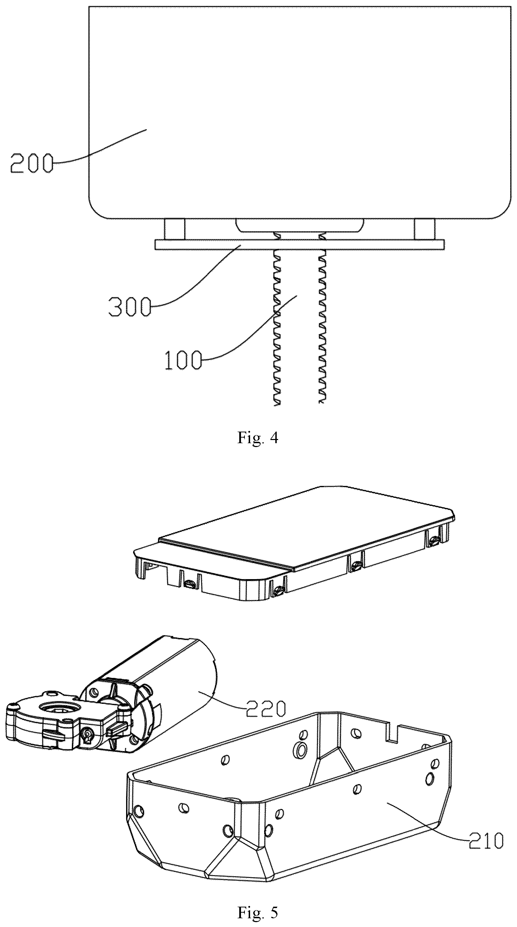

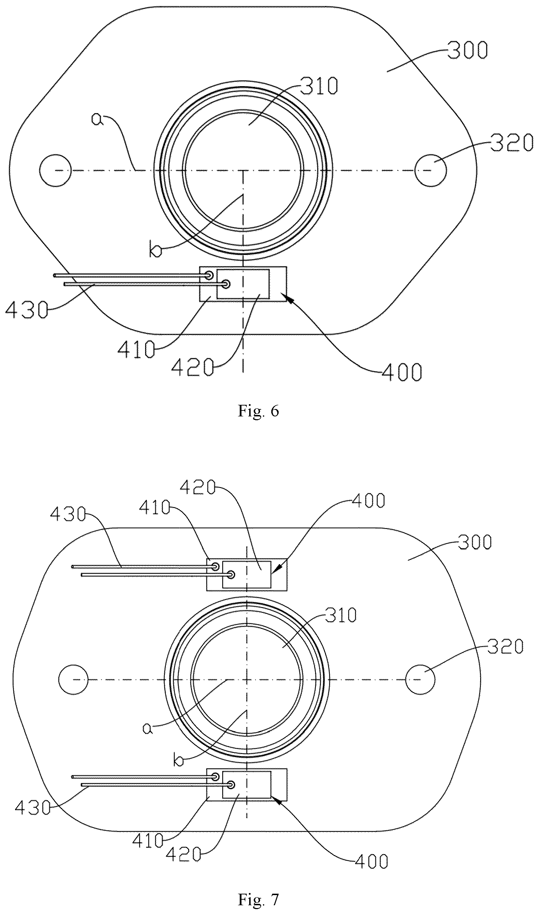

Referring to Figs. 1 through 6, an implementation of the disclosure provides an obstruction detection-enabled lifting column, comprising: a screw rod 100 and an obstruction detection plate 300 configured on the screw rod 100, an assembly hole 310 being formed in the obstruction detection plate 300, the screw rod 100 passing through the assembly hole 310, a sensor 400 configured to detect a deformation stress on the obstruction detection plate 300 being disposed on the obstruction detection plate 300, a fixing part configured to securely attach the obstruction detection plate 300 being arranged on either side of the sensor 400, respectively, a central angle formed by a connecting line between one end of the sensor 400 and the assembly hole 310 and a connecting line between an opposite end of the sensor 400 and the assembly hole 310 being less than 360°, a perpendicular bisector of a connecting line between centers of the two fixing parts passing through the sensor 400. As illustrated in Fig. 6, the dot dash line represented by a is the connecting line between the centers of the fixing parts, and the dot dash line represented by b is the perpendicular bisector of the connecting line between the centers.

The lifting column described herein has a highly sensitive obstruction detection feature and offers a high safety and a high reliability. The lifting column assembled to a device serves to drive the device or a part of the device to be lifted or lowered (for example, in a case of being assembled to a lift desk, controlling lifting or lowering of the body or desktop of the lift desk); if an obstruction is hit in the way of lifting or lowering, the screw rod 100 transfers the axial action force received to the obstruction detection plate 300, causing the obstruction detection plate 300 to be stressed and deformed, thereby activating the sensor 400 to detect that the lifting column hits an obstruction.

The fixing parts are configured to securely mount the obstruction detection plate 300. The areas on the obstruction detection plate 300 nearby the fixing parts have the highest rigidity due to the secured connection; the farther from the fixing parts, the lower the rigidity; the area where the perpendicular bisector of the connecting line between the centers of the two fixing parts is located has the lowest overall rigidity among the section between the two fixing parts, so that the sensor 400 mounted there can detect an obstruction more quickly, thereby enhancing obstruction detection sensitivity of the lifting column.

The sensor 400, when being mounted on the obstruction detection plate 300, does not need to pass through the screw rod 100. Instead, the sensor 400 may be first mounted on the obstruction detection plate 300 and then the screw rod 100 is assembled; or, the obstruction detection plate 300 is first assembled on the screw rod 100 and then the sensor 400 is mounted. In addition, when the sensor 400 fails, it may be directly dismantled or replaced from the obstruction detection plate 300 without a need of disassembling the obstruction detection plate 300 from the screw rod 100, whereby operation is eased.

To enhance sensitivity of the sensor 400, the sensor 400 needs to be disposed proximal to the assembly hole 310. To this end, the present disclosure gives the following limitations:

a distance between the sensor 400 and the assembly hole 310 is less than a distance between the sensor 400 and an edge of the obstruction detection plate 300; respective fixing parts are disposed proximal to the edge of the obstruction detection plate 300; the assembly hole 310 is disposed at the central position of the obstruction detection plate 300.

In this implementation, the sensor 400 is exemplarily a piezoelectric element. The piezoelectric element may be directly bonded, via an adhesive applied to the back surface thereof, to the obstruction detection plate 300, whereby the piezoelectric element is securely attached to the obstruction detection plate 300. Since the sensor 400 is mounted simply and may adopt an existing sensing element, the cost is reduced and the mounting efficiency is enhanced. The piezoelectric element comprises a metal plate 410 with its back surface applied with an adhesive tape, a piezoelectric material 420 arranged on the metal plate 410, and a wire 430 connected to the piezoelectric material 420 and configured to transmit signal data of the piezoelectric element. When the obstruction detection plate 300 is deformed, the piezoelectric element is also stressed and deformed, so that the piezoelectric material 420 receiving the action force generates a signal, i.e., an obstruction signal. In addition, other types of pressure-activated sensors 400, e.g., a strain gauge, can also be selected. A spacing between the sensor 400 and another part refers to the distance between the center of the piezoelectric material 420 and said another part; an angle between the sensor 400 and the assembly hole 310 refers to an angle formed by the connecting line between one end of the piezoelectric material 420 and the center of the assembly hole 310 and the connecting line between the opposite end of the piezoelectric material 420 and the center of the assembly hole 310.

Upon hitting an obstruction, the screw rod 100 transmits an action force to the obstruction detection plate 300; the action force is transmitted around with diminishment from the assembly hole 310. If the edge of the obstruction detection plate 300 is distant from the assembly hole 310, it is hard to generate a desired deformation stress instantly when the lifting column hits the obstruction. By disposing the sensor 400 closer to the assembly hole 310, the sensor 400 can detect the deformation stress instantly to generate an obstruction signal at the early stage of hitting the obstruction.

The positions where the fixing parts are disposed on the obstruction detection plate 300 have an enhanced rigidity so that deformation stress can hardly occur upon hitting an obstruction. The more distantly the fixing parts are disposed from the assembly hole 310, the less the deformation of the obstruction detection plate 300 disposed around the assembly hole 310 is affected, whereby the obstruction response speed of the lifting column is ensured.

The center of the obstruction detection plate 300 is the least rigid area of the entire obstruction detection plate 300, where the assembly hole 310 is distantly spaced from the fixing parts; therefore, by disposing the assembly hole 310 at the central position of the obstruction detection plate 300, the obstruction detection plate 300 around the assembly hole 310 achieves the largest deformation at the moment an obstruction is hit, which reduces the time taken by the sensor 400 to detect the obstruction.

By arranging two fixing parts on the obstruction detection plate 300 in such a manner that the two fixing parts are symmetrical about and equally distant from the center of the assembly hole 310 and meanwhile the assembly hole 310 is located at a midpoint position of the connecting line between the centers of the two fixing parts, so that the area of the obstruction detection plate 300 around the assembly hole 310 is a stress concentrated area, whereby the obstruction detection speed of the sensor 400 is ensured.

Referring to Figs. 6 through 9, in an implementation of the disclosure, a solution of further enhancing sensitivity of the sensor 400 is provided based on the implementation described *supra.*

A distance between the sensor 400 and the assembly hole 310 is less than a distance between the sensor 400 and respective fixing parts, and the respective fixing parts are equally distant from the assembly hole 310.

The fixing parts can enhance rigidity of the obstruction detection plate 300. To enable the sensor 400 to detect an obstruction instantly, it is needed to dispose the sensor 400 at a position where the deformation stress is concentrated. By disposing the fixing parts distant from the sensor 400, the sensor 400 may be less affected by the fixing parts, leading to a higher obstruction detection speed.

The assembly hole 310 is formed on the perpendicular bisector of the connecting line between the centers of the fixing parts, i.e., the assembly hole 310 is located in the area of the lowest rigidity on the obstruction detection plate 300, so that at the early stage when the lifting column hits an obstruction, the obstruction detection plate 300 disposed around the assembly hole 310 can achieve a desired degree of deformation instantly to activate the sensor 400 to generate an obstruction signal.

Referring to Figs. 6, 8, and 9, in an implementation of the disclosure, only one sensor 400 is provided. The position of an obstruction hit by the device installed with the lifting column is not fixed. For a different position of the obstruction, the direction of the action force transmitted by the screw rod 100 towards the obstruction detection plate 300 also varies; since the obstruction detection plate 300 around the assembly hole 310 achieves a larger degree of deformation at the moment an obstruction is hit, while the sensor 400 is disposed in the area around the assembly hole 310 and the fixing parts can also concentrate the deformation stress to the position of the sensor 400, the area around the assembly hole 310 can always achieve a deformation irrespective of where the action force is directed; due to low rigidity of the mounting position of the sensor 400, the deformation stress transmitted to the sensor 400 is less attenuated, so that the sensor 400 can detect the deformation stress to give an instant response; therefore, provision of one sensor 400 on the obstruction detection plate 300 suffices to satisfy service requirements, which reduces costs and facilitates mounting.

Referring to Fig. 7, in an implementation of the disclosure different from the implementation described *supra,* two sensors 400 are provided, where the perpendicular bisector of the connecting line between the centers of the two fixing parts extends through at least one of the sensors 400. The two sensors 400 can detect stresses received in different areas on the obstruction detection plate 300; by analyzing the signal data of the two sensors 400, obstruction detection accuracy can be enhanced with reduced false alarms. When one of the two sensors 400 fails, the other sensor 400 can also perform obstruction detection alone. By disposing at least one of the two sensors 400 in the area on the obstruction detection plate 300 where the deformation stress is concentrated, the obstruction response speed of the lifting column is ensured.

The two sensors 400 are spaced by the assembly hole 310. Under different obstruction conditions, the direction of the action force transmitted by the screw rod 100 to the obstruction detection plate 300 also varies; when the action force of the screw rod 100 is transmitted towards one side of the assembly hole 310, a difference arises between the degrees of deformation of the two sides of the assembly hole 310, where obstruction detection of the sensor 400 at the opposite side will be delayed. By disposing the sensor 400 at each of the two sides of the assembly hole 310, the detection range of the sensors 400 increases, so that irrespective of which direction the action force of the screw rod 100 is directed to, the sensors 400 can always detect the obstruction instantly.

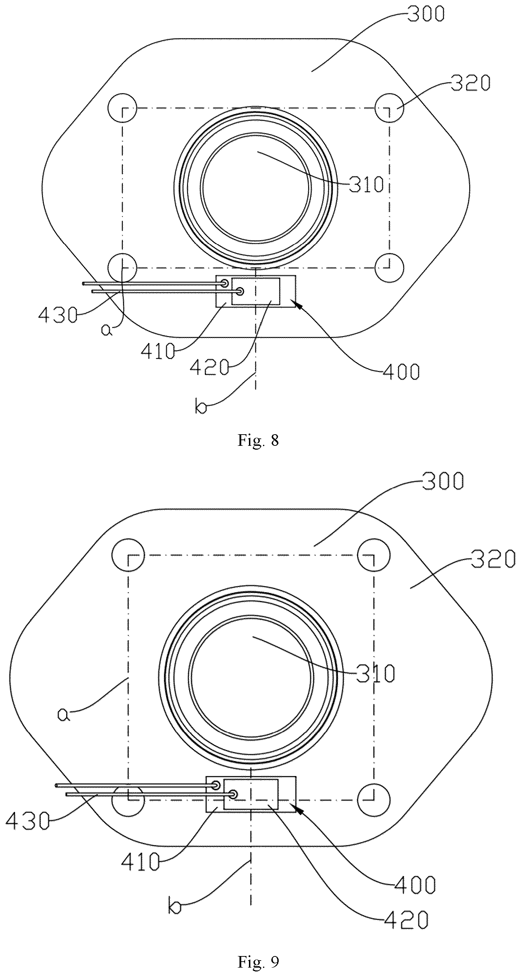

Referring to Figs. 8 and 9, in an implementation of the disclosure different from the implementations described *supra,* at least three fixing parts are arranged on the obstruction detection plate 300.

Provision of more than two fixing parts leads to a more secure attachment of the obstruction detection plate 300.

As illustrated in Fig. 8, a plurality of fixing parts are distributed non-uniformly in the circumferential direction of the assembly hole 310; a length of the connecting line between the centers of two neighboring fixing parts in the circumferential direction of the assembly hole 310 is denoted as L; the sensor 400 is disposed between the two neighboring fixing parts with the largest spacing, where the sensor 400 is affected least compared with being disposed between other fixing parts, whereby the obstruction response speed of the lifting column is ensured. If the fixing parts are uniformly distributed in the circumferential direction of the assembly hole 310, the entire obstruction defection plate 300 is uniformly stressed when hitting an obstruction, in which case the sensor 400 can be disposed between any two neighboring fixing parts.

As illustrated in Fig. 9, if a plurality of fixing parts are uniformly distributed in the circumferential direction of the assembly hole 310, the lengths L of respective connecting lines between every two neighboring fixing parts in the circumferential direction of the assembly hole 310 are equal; then, the entire obstruction detection plate 300 is uniformly stressed when hitting an obstruction; in this way, the sensor 400 may be disposed between any two neighboring fixing parts.

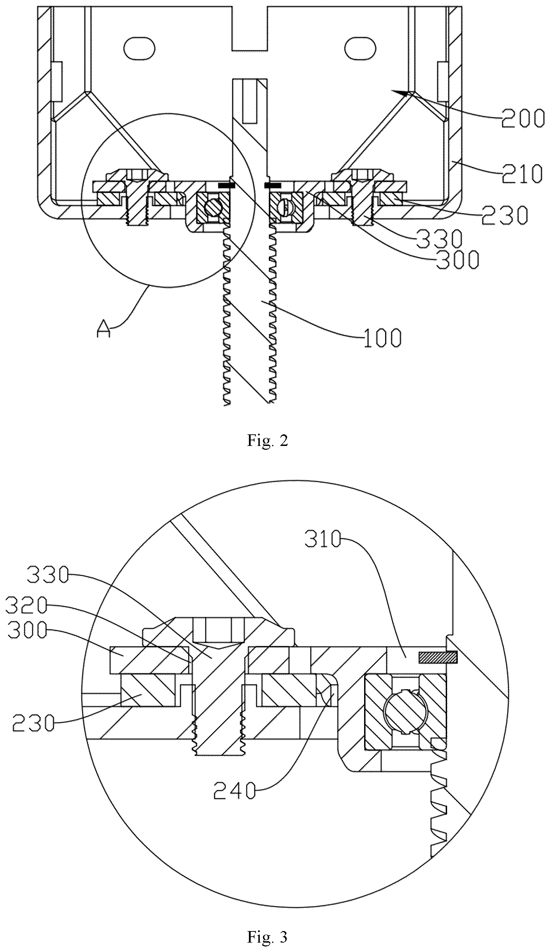

Referring to Figs. 2 through 4, in an implementation of the disclosure, the lifting column further comprises a motor kit 200 configured to drive the screw rod 100; the obstruction detection plate 300 is a bearing plate disposed on the motor kit 200; the fixing parts are configured to securely fix the obstruction detection plate 300 onto the motor kit 200. The motor kit 200 is configured to control lifting and lowering of the screw rod 100; a motor kit 200 gear is disposed in the motor kit 200 and configurable to drive the screw rod 100 to rotate and control a rotational direction of the screw rod 100, thereby controlling lifting and lowering of the screw rod 100. The bearing plate is configured to mount a bearing so as to improve rotating smoothness of the screw rod 100; upon hitting an obstruction, the action force on the screw rod 100 is transmitted to the bearing plate, so that obstruction detection is enabled just by arranging the sensor 400 on the bearing plate, which also eliminates a need of additionally arranging a plate body for obstruction detection on the screw rod 100.

In addition, the obstruction detection plate 300 may also be disposed on the lower surface of the motor kit 200.

The motor kit 200 comprises a kit body 210, a motor 220 disposed in the kit body 210, and a projection 230 disposed in the kit body 210, the fastener 330 being securely connected to the projection 230, a deformation gap 240 configured to avoid the obstruction detection plate 300 being formed between the obstruction detection plate 300 and a bottom wall of the kit body 210. The deformation gap 240 facilitates deformation of the obstruction detection plate 300 and prevents the deformation from being blocked by the kit body 210. The projection 230 is configured to securely attach the obstruction detection plate 300 so that the middle portion of the obstruction detection plate 300 does not contact the bottom wall of the kit body 210; as such, the rigidity of the middle portion of the obstruction detection plate 300 is not enhanced by the kit body 210, and the detection performance of the sensor 400 is not affected.

The fixing part comprises the fixing hole 320 formed in the obstruction detection plate 300 and the fastener 330 which passes through the fixing hole 320 so as to be securely connected to the motor kit 200. The fastener 330 may be a screw. The fixing part may also be a rivet that is fired by a rivet gun to directly secure the obstruction detection plate to the motor kit. The fixing part may also be a snap fastener that is integrally formed on the obstruction detection plate and configurable to be snap-engaged with the motor kit.

The present disclosure further describes an electric lifting mechanism, comprising a lifting platform and the obstruction detection-enabled lifting column as described in any implementation *supra,* the lifting column being configurable to control lifting and lowering of the lifting platform. The present disclosure further describes an electric lifting mechanism that adopts the obstruction detection-enabled lifting column as described *supra;* when the lifting platform hits an object or a user's body part in the process of being lifted or lowered, the obstruction detection plate is deformed, and the sensor can quickly detect the deformation stress on the obstruction detection plate, so that the electric lifting mechanism performs a corresponding obstruction response; the electric lifting mechanism described herein has a higher safety and a higher reliability. When the sensor fails, it can be replaced without a need of disassembling the obstruction detection plate from the screw rod.

Examples of the electric lifting mechanism include a lift desk, a lift bed, and the like.

What have been described above are only embodiments of the disclosure; however, the protection scope of the disclosure is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. An obstruction detection-enabled lifting column, comprising a screw rod and an obstruction detection plate configured on the screw rod, an assembly hole being formed in the obstruction detection plate, the screw rod passing through the assembly hole, wherein a sensor configured to detect a deformation stress on the obstruction detection plate is arranged on the obstruction detection plate, a fixing part configured to securely mount the obstruction detection plate is provided on either side of the sensor, respectively, a central angle formed by a connecting line between one end of the sensor and a center of the assembly hole and a connecting line between an opposite end of the sensor and the center of the assembly hole is less than 360°, and a perpendicular bisector of a connecting line between centers of two fixing parts passes through the sensor.

2. The obstruction detection-enabled lifting column according to claim 1, wherein a distance between the sensor and the assembly hole is less than a distance between the sensor and an edge of the obstruction detection plate.

3. The obstruction detection-enabled lifting column according to claim 1, wherein respective fixing parts are disposed proximal to the edge of the obstruction detection plate.

4. The obstruction detection-enabled lifting column according to claim 3, wherein the assembly hole is arranged at a central position of the obstruction detection plate.

5. The obstruction detection-enabled lifting column according to claim 1, wherein a distance between the sensor and the assembly hole is less than a distance between the sensor and respective fixing parts.

6. The obstruction detection-enabled lifting column according to claim 1, wherein respective fixing parts are equally distant from the assembly hole.

7. The obstruction detection-enabled lifting column according to any of claims 1 through 6, wherein two sensors are provided, the perpendicular bisector of the connecting line between the centers of the two fixing parts extending through at least one of the sensors.

8. The obstruction detection-enabled lifting column according to claim 7, wherein the two sensors are spaced by the assembly hole.

9. The obstruction detection-enabled lifting column according to any of claims 1 through 6, wherein two fixing parts are arranged on the obstruction detection plate, the two fixing parts being symmetrical about the center of the assembly hole.

10. The obstruction detection-enabled lifting column according to any of claims 1 through 6, wherein at least three fixing parts are arranged on the obstruction detection plate; in a circumferential direction of the assembly hole, a length of a connecting line between centers of two neighboring fixing parts is L; the sensor is at least partially located between two fixing parts with largest L;
or, at least three fixing parts uniformly distributed along an outer periphery of the assembly hole are arranged on the obstruction detection plate, and in the circumferential direction of the assembly hole, the sensor is located between any two neighboring fixing parts.

11. The obstruction detection-enabled lifting column according to any of claims 1 through 6, wherein the lifting column further comprises a motor kit configured to drive the screw rod, the obstruction detection plate is a bearing plate disposed on the motor kit, and the fixing parts fix the obstruction detection plate onto the motor kit.

12. The obstruction detection-enabled lifting column according to claim 11, wherein the fixing part is a snap fastener in snap engagement with the motor kit; or, the fixing part comprises a fixing hole formed in the obstruction detection plate and a fastener passing through the fixing hole to be thereby securely attached to the motor kit.

13. The obstruction detection-enabled lifting column according to any of claims 1 through 6, wherein the sensor is a strain gauge or a piezoelectric element adhesively bonded on the obstruction detection plate.

14. An electric lifting mechanism, comprising a lifting platform and an obstruction detection-enabled lifting column according to any of claims 1 through 13, the lifting column being configured to control lifting and lowering of the lifting platform.
